# EUROPEAN PATENT SPECIFICATION

(11) **EP 4 105 953 B1**
(45) Date of publication and mention of the grant of the patent: **25.12.2024**
(21) Application number: 21753023.7
(22) Date of filing: 04.02.2021
(51) Int. Cl.: H01F 1/11, H01F 41/02, C04B 35/26, C04B 35/632, C04B 35/64

(54) **METHOD FOR OBTAINING A MAGNETICALLY ANISOTROPIC AND DENSE PERMANENT CERAMIC MAGNET**
VERFAHREN ZUR HERSTELLUNG EINES MAGNETISCH ANISOTROPEN UND DICHTEN PERMANENTEN KERAMIKMAGNETEN
PROCÉDÉ D'OBTENTION D'UN AIMANT PERMANENT EN CÉRAMIQUE MAGNÉTIQUEMENT ANISOTROPE ET DENSE

(30) Priority: 11.02.2020 ES 202030112
(43) Date of publication of application: 21.12.2022
(73) Proprietor: Consejo Superior de Investigaciones Científicas (CSIC), 28006 Madrid (ES)
(72) Inventor: SERRANO RUBIO, Aida, 28049 Madrid (ES); GARCÍA MARTÍN, Eduardo, Madrid 28049 (ES); FERNÁNDEZ LOZANO, José Francisco, Madrid 28049 (ES); GRANADOS MIRALLES, Cecilia Pilar, Madrid 28049 (ES); QUESADA MICHELENA, Adrian, Madrid 28049 (ES)
(74) Representative: Pons
(86) International application number: PCT/ES2021/070084
(87) International publication number: WO 2021/160909

(56) References cited:
- WO-A1-2017/137640
- WO-A1-2019/009320
- WO-A2-2012/103020
- CN-A- 1 937 121
- US-A1- 2017 088 471
- SERRANO ET AL: "Effect of organic solvent on the cold sintering processing of SrFe12O19 platelet-based permanent magnets", ARXIV.ORG, CORNELL UNIVERSITY LIBRARY, 201 OLIN LIBRARY CORNELL UNIVERSITY ITHACA, NY 14853, 24 September 2023 (2023-09-24), XP091624803, DOI: 10.1016/J.JEURCERAMSOC.2021.10.062
- SORIA G. D., JENUS P., MARCO J. F., MANDZIAK A., SANCHEZ-ARENILLAS M., MOUTINHO F., PRIETO J. E., PRIETO P., CERDÁ J., TEJERA-CENT: "Strontium hexaferrite platelets: a comprehensive soft X-ray absorption and Mossbauer spectroscopy study", SCIENTIFIC REPORT S, vol. 9, no. 11777, 13 August 2019 (2019-08-13), pages 1 - 13, XP055847253, ISSN: 2045-2322, DOI: 10.1038/s41598-019-48010-w
- VINAYKUMAR, R. ET AL.: "Low-temperature sintering of SrCol.5Til.5Fe90l9 ferrite and its characterization for X-band antenna application", JOURNAL OF ALLOYS AND COMPOUNDS, vol. 790, 12 March 2019 (2019-03-12), pages 413 - 420, XP085664493, ISSN: 0925-8388, DOI: 10.1016/j.jallcom. 2019.03.16 8
- ITOH, H. ET AL.: "Dispersion and particle packing of magnetic oxide powders", CERAMICS INTERNATIONAL, vol. 12, 1 January 1986 (1986-01-01), pages 85 - 93, XP024157786, ISSN: 0272-8842, DOI: 10.1016/0272-8842(86)90021-0

## Description

The present invention relates to a method for obtaining a permanent ceramic magnet comprising a step of mixing hard or soft magnetic micro and/or nanoparticles with a basic or acid organic solvent, a compaction step, a heating step under pressure, a cooling step, and a sintering step.

The present invention belongs to the sector of magnetic materials and their industrial applications.

### BACKGROUND OF THE INVENTION

Permanent magnets are crucial materials since they allow storing, supplying and converting electrical energy into mechanical energy and vice versa, such that better magnets lead to greater energy efficiency.

The most competitive magnets at an industrial level are based on rare earths, however, the global crisis associated with these elements has highlighted the economic, geostrategic and environmental relevance of producing alternative magnets of competitive performance for certain applications in order to reduce dependency on rare earths.

The combination of a hard magnetic material based on rare earths and a hard magnetic material based on ferrites of an oxidic nature is a way to reduce the rare earths content in permanent magnets, without worsening or maintaining the magnetic properties thereof, as claimed by CN106312077.

CN105006325 discloses a method for preparing composite ferrite powder with exchange coupling effect and single-phase magnetic behaviour through grinding between a soft magnetic phase of FeB and a hard magnetic phase of ferrite according to a mass ratio of 1:1. With the method adopted, the exchange coupling effect can be carried out without the need for high-temperature sintering. However, the resulting product does not exhibit a permanent magnet behaviour since it exhibits soft magnetic behaviour with remanent magnetisation values less than 0.12 T.

CN101481241 relates to a method for preparing magnetic nanocrystalline particles, characterised in that an aluminium-doped barium ferrite nanocrystalline powder presenting hard magnetic behaviour and a nickel-copper-zinc ferrite nanocrystalline powder with soft magnetic behaviour are mixed, dried and thermally treated, obtaining a complex nanocrystalline phase having a saturation magnetisation of 50 emu·g⁻¹, and a coercive field of 5.8 kOe.

WO2017137640A1 claims hybrid permanent magnet microcomposites comprising an oxide-based ferrite hard magnetic material, a metal-based soft magnetic material and an organic coupling agent. The microcomposite has improvements of 25 % in the remanence magnetisation with respect to the ferrite phase, of isotropic powders without magnetic orientation. In the method of obtainment, the presence of a coupling agent is required to protect the soft magnetic material, which has particles with sizes greater than 200 nm from oxidation. The material of WO2017137640A1 is an isotropic powder having an improvement in remanence with respect to an isotropic ferrite powder; however, the invention of WO2017137640A1 does not cover the case of anisotropic materials (i.e. magnetically oriented). In this manner, although the isotropic composite has a higher remanence, it does not necessarily imply that said improvement can be transferred to a magnetically oriented or anisotropic composite.

Permanent magnets are usually sintered at high temperatures in order to obtain dense bodies and maximise the volume-dependent energy product. A dense magnetic material also has the advantage of the mechanical integrity thereof and greater resistance to processes of environmental degradation. The densification or sintering processes take place at high temperatures which, in the case of ferrite magnets, require temperatures >1200 °C and times greater than 30 min to 4 hours at maximum temperature. During heat treatment, grain growth occurs as a result of mass transport phenomena. The consequence of the increase in grain size is a reduction in the magnetic response, in particular a strong reduction of the coercive field, Hc.

US2017/0088471A1 claims the sintering of ceramic and composite materials with at least one inorganic element by means of the cold sintering method called "cold sintering process". This methodology allows sintering at least one inorganic compound in the form of particles by using an aqueous-based solvent with at least 50 % by weight of H₂O. The use of this aqueous solvent in a proportion of no more than 30 % by weight with respect to the inorganic component partially solubilises the inorganic compound to give rise to a densified material at temperatures below 200 °C and applying a uniaxial pressure of less than 5000 MPa. As a result of the cold sintering process, densified parts with at least a relative density of 85 % can be obtained. However, this process limits the controlled grain growth of the particles.

Therefore, it is necessary to develop new methods for producing competitive permanent magnets comprising minimal amounts of rare earths.

### DESCRIPTION OF THE INVENTION

Next, the definitions of certain terms that will be used throughout the description are presented:
The term "hard magnetic particles" is understood, in the present invention, as that particle that has a coercive field between 1.8 kOe and 2.5 kOe and a saturation magnetisation between 40 emu/g and 65 emu/g. Said values were determined by means of a vibrating sample magnetometer for a maximum magnetic field of 1.1 T. These measurement conditions were maintained in all the examples of the present invention.

The term "soft magnetic particles" is understood in the present invention as that particle that presents a saturation magnetisation between 70 emu/g and 210 emu/g.

In the present invention, the term "organic solvent" encompasses both acidic and basic organic compounds. The most common organic acids are carboxylic acids, whose acidity is associated with its carboxyl group -COOH. Sulphonic acids, containing the group - SO₂OH, are relatively stronger acids. Alcohols, with -OH, can act as acids but are usually very weak. The relative stability of the conjugate base of the acid determines the acidity thereof. Other groups can also confer a generally weak acidity: the thiol group -SH, the enol group, and the phenol group. In biological systems, organic compounds containing these groups are generally called organic acids.

An organic base is an organic compound that acts as a base. Organic bases are generally, but not always, proton acceptors. In general, they contain nitrogen atoms which can be easily protonated. Amines and nitrogen-containing heterocyclic compounds are organic bases. Examples include: pyridine, alkanamines, such as methylamine, imidazole, benzimidazole, histidine, guanidine, phosphazene bases, quaternary ammonium cation hydroxides or some other organic cations.

The term "magnetic anisotropy" is understood as the non-homogeneity of the magnetic properties when measured in different directions in space. In other words, the magnetic response is different depending on the direction in which it is examined.

The term "magnetocrystalline anisotropy" is understood as the non-homogeneity of the magnetic properties along the examined axes of the crystalline structure. A material will be magnetically harder the greater the total magnetocrystalline anisotropy thereof.

The term "shape anisotropy" is understood as the magnetic response as a consequence of the geometric shape of the material or of the particles that make it up.

The equivalences between magnetic units are 1 T = 10000 G = 10000 Oe = 795,775 kA·m⁻¹ and 1 emu·g⁻¹ = 4·π·10⁻⁷ A·m²·kg⁻¹

The density or absolute density is the magnitude that expresses the relationship between the mass and the volume of a substance or a solid object. Its unit in the International System is kilogram per cubic meter (kg/m³), although it is also frequently expressed in g/cm³.

The relative density of a substance is the relationship between its density and that of another reference substance; therefore, it is a dimensionless quantity (without units).

In the present invention, the term "relative or apparent density" is understood as that relationship between the measured density and the theoretical density of a magnet.

The present invention relates to a method for obtaining a permanent ceramic magnet that does not contain rare earths, that is magnetically anisotropic and exhibits an apparent density greater than 90 %. Said method is characterised in that it comprises a step of mixing hard magnetic microparticles with a basic or acidic organic solvent, a heating step under pressure, a cooling step, and a sintering step.

The permanent ceramic magnet that is produced following the methods of the present invention has a coercive field greater than 2400 Oe, for some preferred embodiments, permanent magnets with a coercive field of up to 3000 Oe have been produced.

The main applications of said permanent magnets are framed within the renewable energy generation and storage sector (wind turbine generators, generators in wave parks, flywheels) and the automotive industry (a car contains an average of 400 magnets), for example, magnets for power steering and power windows, and in particular alternators and engines for electric or hybrid vehicles. In this sense, the new electric motors require the use of permanent magnets that withstand high temperatures with high energy products that require high coercive field values such as those claimed in the present invention, aspect that will expand the use of these materials.

Next, the detailed description of the invention is presented:
In a first aspect, the present invention relates to a method for obtaining a permanent ceramic magnet comprising
- hard magnetic particles in the form of platelets of ferrite or hexaferrite composition of formula MFe₁₂O₁₉, wherein M is a divalent alkaline earth metal selected from Sr⁺², Ba⁺² and any of the combinations thereof, and wherein said magnetic particles have a bimodal particle size distribution with a first particle size between 101 nm and 500 nm and a second particle size between 1 µm and 10 µm,
characterised in that it comprises the following steps:
a) mixing homogeneously
   - hard magnetic particles of ferrite or hexaferrite composition of formula MFe₁₂O₁₉, wherein M is a divalent alkaline earth metal selected from Sr⁺², Ba⁺² and any of the combinations thereof, with particle size between 101 nm and 10 µm,
   - and an organic solvent;
   wherein the percentage of organic solvent ranges from 5 % to 50 % by weight with respect to the total weight of the mixture,
b) compacting the homogeneous mixture obtained in step (a) at a uniaxial pressure of between 5 MPa and 360 MPa for a period of time between 6 s and 5 min;
c) heating the product obtained in step b) under uniaxial pressure between 20 MPa and 5000 MPa at a temperature between 120 °C and 300 °C, and for a period of time between 30 min and 4 h;
d) cooling the product from step (c) until reaching a temperature between 80 and 120 °C to facilitate the extraction of the compacts, and subsequent cooling to room temperature between 18 °C and 40 °C;
and e) sintering the product from step (d) at a temperature between 1000 °C and 1150 °C in the presence of an air atmosphere.

The step (a) of the method of the present invention relates to homogeneously mixing
- hard magnetic particles of ferrite or hexaferrite composition of formula MFe₁₂O₁₉, wherein M is a divalent alkaline earth metal selected from Sr⁺², Ba⁺² and any of the combinations thereof, with particle size between 101 nm and 10 µm
- and an organic solvent;

Said mixing process of step (a) is simple and low cost.

The mixture is preferably made in an agate mortar, until the powder is homogeneously moistened by the acidic or basic organic solvent. In a scaled-up process, the mixture is carried out in an Eirich-type intensive mixer until the required degree of homogeneity is achieved.

In a preferred embodiment of the method of the present invention, the mixture of step (a) further comprises
- hard magnetic particles of ferrite or hexaferrite composition of formula MFe₁₂O₁₉, wherein M is a divalent alkaline earth metal selected from Sr⁺², Ba⁺² and any of the combinations thereof, with particle size between 5 nm and 100 nm,
obtaining a permanent magnet with a coercive field of up to 2800 Oe.

In another preferred embodiment of the method of the present invention, the mixture of step (a) further comprises
- soft magnetic particles of Fe or Fe₃O₄ selected from particles with particle size between 10 µm and 15 µm or particles with particle size between 5 nm and 100 nm,
obtaining a permanent magnet with a coercive field of up to 3000 Oe.

In a preferred embodiment of the method of the present invention, step (a) is carried out in the presence of an atmosphere of the same acidic or basic organic solvent used in the mixture.

Preferably, the hard magnetic ferrite nanoparticles/microparticles and the soft magnetic nanoparticles/microparticles are premixed, for example, by means of a dry grinding process for 10 minutes in a Mixermill 8000 equipment using a nylon container and yttria-stabilised zirconia balls of 1 mm in diameter, to produce a homogeneous mixture of powders.

In a preferred embodiment of the method of the present invention, the organic solvent of step (a) is an acidic organic solvent selected from glacial acetic acid (CH₃COOH), oleic acid (C₁₈H₃₄O₂), lactic acid (C₃H₆O₃), formic acid (CH₂O₂), citric acid (C₆H₈O₇), oxalic acid (C₂H₂O₄), uric acid (C₅H₄N₄O) or malic acid (C₄H₆O₅); or a combination thereof.

In a preferred embodiment of the method of the present invention, the organic solvent of step (a) is a basic organic solvent selected from anisole (C₇H₈O), aniline (C₆H₇N), purine (C₅H₄N₄), triethylamine (C₆H₁₅N), oleamine (C₁₈H₃₇N); or a combination thereof.

The step (b) of the method relates to compacting the homogeneous mixture obtained in step (a) with a uniaxial pressure of between 5 MPa and 360 MPa, for a period of time between 6 s and 5 min, at room temperature between 18 °C and 40 °C.

Said compaction step (b) is industrially feasible.

The compaction step (b) is carried out in a period of time between 6 s and 5 min. This period of time ensures the alignment of the magnetic particles in the pressing direction to thus produce an anisotropic magnetic material.

In another preferred embodiment of the method of the present invention, the compaction step (b) is carried out in the presence of a magnetic field of at least 0.2 T oriented in the direction perpendicular to the direction of the pressure exerted. The applied magnetic field is between 0.2 T and 5 T.

On the one hand, the application of an external magnetic field in the direction of pressure application during the compaction process allows the hard magnetic particles with platelet morphology to be magnetically aligned along the magnetisation axis thereof which, due to its magnetocrystalline anisotropy, is perpendicular to the plane of the platelets. On the other hand, the presence of an acid or basic organic solvent during the application of a magnetic field reduces the friction between the particles and favours the alignment processes of the easy magnetisation axis of the hard magnetic particles and the applied external magnetic field.

The step c) of the method of the present invention relates to heating the product from step b) under uniaxial pressure between 20 MPa and 5000 MPa up to the boiling temperature of the organic solvent used in step (a), preferably at a temperature of between 120 °C and 300 °C, for a time between 30 min and 4 h.

The pressure and temperature provide an increase in the density of the product from step b) and exert localised pressure between the particles that is concentrated in the contact areas between them. The solubility of the strontium ferrite with the organic solvent used gives rise to a partial solubilisation of the crystalline structure that takes place on the surface of the inorganic particles, preferably in the areas of greatest chemical potential and/or in the areas where mechanical stresses accumulate. Thus, the process of partial solubilisation of the magnetic structure allows for mass transport that favours the creation of sintering necks between the particles. This process is favoured by a supersaturation of the solution that is accentuated with the removal by evaporation of the organic solvent with temperature.

By way of comparison, it must be noted that pressure and temperature can cause a degradation of the hard magnetic condition which is generally partial after the step (c) of the method of the present invention and results in amorphous phases or phases that do not have hard magnetic order at room temperature, such as α-Fe₂O₃. Said degradation is non-reversible by means of a subsequent heat treatment when an aqueous-based acid solution is used, i.e., a solution in which the percentage by weight of water is greater than 50 %.

The product obtained in step (c) is allowed to cool until it reaches a temperature of between 80 and 120 °C and, with the help of a press applying uniaxial pressure, it is extracted from the mould. The extraction of the compacted part is favoured at said temperatures since the differences in the coefficient values of thermal expansion between the compacted part and the mould are smaller than those that take place when the assembly is cooled to room temperature. At room temperature, the metal mould exerts a maximum compression force on the compact and extraction is made difficult. Subsequently, the product extracted from the mould is allowed to cool to room temperature, between 18°C and 40°C. After this step (d) of the method of the present invention, parts are produced with a relative density greater than 70% with respect to the theoretical density.

In the present invention, the term "relative or apparent density" is understood as that relationship between the measured density of the permanent ceramic magnet according to the Archimedes' method or by the relationship between the mass determined by weighing and its volume determined by dimensional measurements the theoretical density of hard magnetic particles of ferrite or hexaferrite composition of formula MFe₁₂O₁₉, wherein M is a divalent alkaline earth metal selected from Sr⁺², Ba⁺² and any of the combinations thereof.

Note that the theoretical density of SFO is 5.1 g/cm³, the theoretical density of α-Fe₂O₃ is 5.26 g/cm³ and the theoretical density of Fe₃O₄ is 5.175 g/cm³. As used herein, the term relative density relates to % of density relative to the theoretical density of SFO. Said term is used both for SFO materials and for materials that initially comprise a proportion of iron in the oxidised or non-oxidised form thereof.

The step (e) of the method of the present invention relates to the sintering of the product from step (d) by means of a heat treatment at a temperature between 1000 °C and 1150 °C in the presence of an air atmosphere. The purpose of said step is to improve the densification and, where appropriate, recover the hard magnetic condition. The sintered parts obtained after the step (e) result in dense parts with a relative density greater than 90 % compared to the theoretical density.

In a preferred embodiment of the method of the present invention, the maximum temperature reached in the step (e) of sintering, between 1000 °C and 1150 °C, is maintained constant for a period of time between 30 min and 4 h.

In another preferred embodiment of the method of the present invention, the sintering step (e) is carried out by means of a thermal cycle with a heating rate of between 0.5 °C/min and 10 °C/min. These speed conditions are preferred because they favour the removal of organic solvent residues present in the product and the solid state chemistry reactions to recover the hard magnetic phase.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

FIG. 1. Scanning electron microscopy images of A) SFO powder used as starting material, B) sintered by means of conventional thermal sintering after a heat treatment for 4 h at 1100 °C (M2) and C) sintered by means of conventional thermal sintering after a heat treatment for 4 h at 1300 °C (M5).
FIG. 2. A) X-ray diffraction patterns obtained from SFO sintered by means of conventional thermal sintering at 1100 °C (M2) and 1300 °C (M5) for 4 h and B) Raman spectroscopy curves obtained from SFO sintered by means of conventional thermal sintering at 1100 °C (M2) and 1300 °C (M5) for 4 h. Raman vibrational modes are assigned in the figure.
FIG. 3. Curves of magnetisation versus applied field of conventionally sintered strontium ferrite magnets at a temperature of 1050 °C (M1), 1100 °C (M2), 1150 °C (M3), 1200 °C (M4) and 1250 °C (M5) for 4 h.
FIG. 4. Curves of magnetisation versus applied field of SFO ferrite magnets sintered by means of cold sintering using (A) 1M acetic acid (M6) and after a heat treatment at 1100 °C for 2 h (M7), (B) 17.5M acetic acid (M8) and after a heat treatment at 1100 °C for 2 h (M9).
FIG. 5. Curves of magnetisation versus applied field of conventionally sintered SFO ferrite magnets using glacial acetic acid (M10), oleic acid (M11) and oleamine (M12).
FIG. 6. Scanning electron microscopy images of (A) Magnet (M13) and (B) after a heat treatment of 1100 °C for 2h Magnet (M14).
FIG. 7. (A) X-ray diffraction patterns and (B) Raman spectroscopy curves obtained from the Magnet (M13) and the Magnet (M14). Raman vibrational modes are assigned in the figure.
FIG. 8. Curves of magnetisation versus applied field of (A) Magnet (M13) and after a heat treatment at 1100 °C for 2h Magnet (M14), (B) Magnets (M14, M16, M18).
FIG. 9. Curves of magnetisation versus applied field of the M19 magnet.
FIG. 10. Scanning electron microscopy images of (A) Magnet (M20) and (B) after a heat treatment of 1100 °C for 2 h Magnet (M21).
FIG. 11. Curves of magnetisation versus applied field of (A) Magnet (M20) and after a heat treatment of 1100 °C for 2 h (M21), (B) Magnet (M22) and after a heat treatment of 1100 °C for 2 h (M23).
FIG. 12. Scanning electron microscopy images of (A) +10% mFe (M24), (C) +5% nFe (M26), (E) +10% nFesOa (M28), and after a heat treatment of 1100 °C for 2 h: (B)+10% mFe (M25), (D) +5% nFe (M27), (F) +10% nFe₃O₄ (M29).
FIG. 13. (A) X-ray diffraction patterns for magnets M24 to M29 and (B) Raman spectroscopy curves obtained for the magnets for samples M24 to M29. Raman vibrational modes are assigned in the figure.
FIG. 14. Curves of magnetisation versus applied field of (A) Magnet M24/M25, (B) M26/27 and (C) M28/M29.

### EXAMPLES

Next, the invention will be illustrated by means of assays carried out by the inventors that demonstrate the effectiveness of the product of the invention.

In order to show the advantages of the materials obtained in the present invention, two comparative examples related to a conventional sintering process and a cold sintering process are presented. Likewise, the conventional sintering process has been carried out using an organic solvent in the compaction step since it is favorable for the mechanical orientation of the particles in the production of compacts due to the morphology thereof.

The term "sintering by the conventional method" is understood as the sintering of parts obtained from powders previously compacted by heat treatment to achieve a final density greater than 90 % of the theoretical density of the material. In a conventional sintering process, the mass transport responsible for the densification is thermally activated, requiring high temperatures.

The term "cold sintering" is understood as the sintering of parts obtained from powders and an aqueous solution through a combined process of temperature up to 200 °C and pressure. In a cold sintering process, the mass transport responsible for the densification occurs by means of the supersaturation of the aqueous solution by removing the solvent with temperature and in the presence of high pressures to achieve a final density greater than 85 % of the theoretical density of the material.

In the comparative examples and in the examples of the present invention, the same starting powder of strontium hexaferrite or strontium ferrite, SFO, is used, in order to show the advantages of the method followed in the present invention.

### Comparative example 1. Manufacture of a permanent strontium hexaferrite (SFO) magnet by conventional thermal sintering

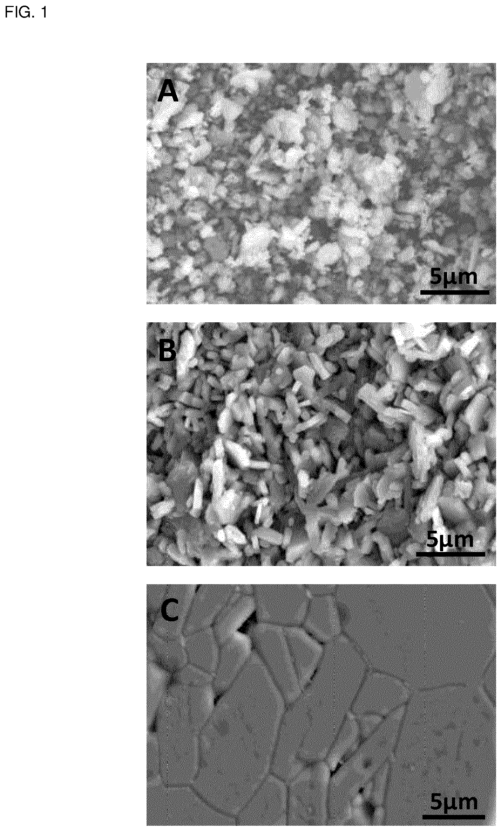

To prepare a permanent ceramic magnet, platelet-shaped particles of strontium hexaferrite (SFO) were used, which presented a bimodal distribution of particle sizes, whose two contributions correspond to platelet thicknesses between 100 nm and 500 nm and to platelet diameters between 1 µm and 5 µm. 0.5 g of the particles in powder form were manually homogenised in an agate mortar for 5 minutes. Figure 1A shows the morphology of the starting particles by means of scanning electron microscopy.

In a second step, the homogeneous powder was compacted in a stainless steel die with an internal diameter of 0.83 cm and a pressure of 150 MPa was applied for 5 minutes.

Subsequently, the compacted parts were extracted and the conventional thermal sintering of the samples was carried out at a maximum temperature of: 1050 °C (M1), 1100 °C (M2), 1150 °C (M3), 1200 °C (M4) and 1250 °C (M5). The heat treatment was carried out in an air atmosphere and with a heating rate of 5 °C/min until reaching the maximum temperature, where it was maintained for 4 h and the subsequent cooling to room temperature according to the oven.

Figures 1B and 1C show the scanning electron microscopy images of a magnet sintered by means of conventional sintering at a sintering temperature of 1100 °C (M2) and 1250 °C (M5) respectively, compared with the starting powder of strontium ferrite (figure 1A). In both sintered parts, an increase in grain size is produced with respect to the particle size of the starting material. During the thermal process, sintering necks are produced between the particles and, if applicable, an increase in the density of the part by increasing the maximum temperature of the process, as shown in Table 1. Specifically, relative densities of 74 % were obtained with respect to the theoretical density for sample M2 and 98 % with respect to the theoretical density of the SFO for sample M5. The grain size of the ferrite magnets presented a growth with respect to the average size of the starting particle, becoming on average 2 µm for magnet M2 and 8 µm for magnet M5. In the latter case, grains with sizes greater than 50 µm were observed. The data relating to magnets M1-M5 sintered by means of the conventional method, and the compact before heat treatment (M0) are summarised in Table 1.

**Table 1. Characteristic properties of permanent magnets prepared by means of conventional sintering.**

| Magnet | Relative Density (%) * | Sintering (T/ t) | Crystalline phases | Hc (kOe) | Mr/Ms Ratio | Ms (emu/g) |
|---|---|---|---|---|---|---|
| M0 | 61 | No treatment | 100% SFO | 2.5 | 0.56 | 51.9 |
| M1 | 69 | 1050 °C / 4h | 100% SFO | 2.8 | 0.65 | 45.4 |
| M2 | 74 | 1100 °C / 4h | 100% SFO | 2.5 | 0.66 | 46.7 |
| M3 | 77 | 1150 °C / 4h | 100% SFO | 2.0 | 0.65 | 49.7 |
| M4 | 94 | 1200 °C / 4h | 100% SFO | 1.3 | 0.64 | 51.5 |
| M5 | 98 | 1250 °C / 4h | 100% SFO | 1.0 | 0.55 | 49.6 |

| | | | | | | |
|---|---|---|---|---|---|---|
| * Regarding the theoretical density of SFO | | | | | | |

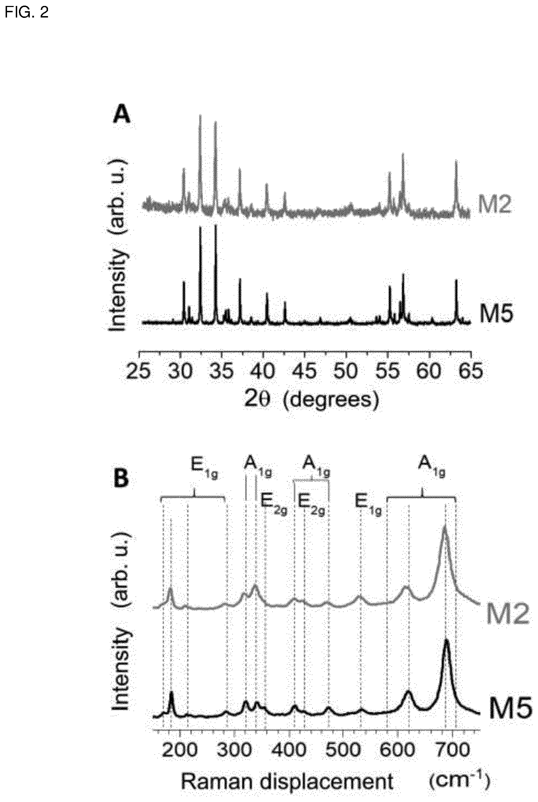

Figure 2A shows the diffraction patterns obtained by means of X-ray diffraction, using a D8 Bruker equipment with Cu Kα radiation (λ = 0.154 nm), of the samples sintered by means of conventional thermal sintering at temperatures of 1100 °C (M2) and 1250 °C (M5). Both parts show diffraction patterns in which the Bragg peaks corresponding to strontium ferrite are identified. By means of a treatment of the data obtained by X-ray diffraction from a Rietveld refinement, it was identified that the crystalline phase in both samples is made up of 100 % strontium ferrite.

Figure 2B represents the results obtained by means of confocal Raman spectroscopy, using a Witec ALPHA 300RA with a Nd:YAG laser (532 nm). The Raman spectra corroborate the data obtained by means of X-ray diffraction presented in Figure 2A, showing a Raman spectrum corresponding to strontium ferrite, identifying the main modes of vibration and without the presence of other phases.

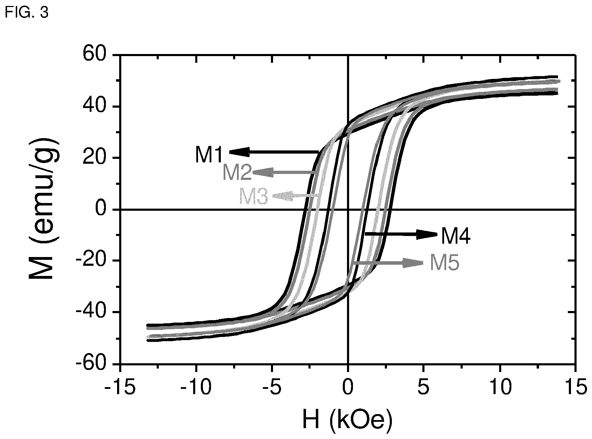

The magnetic response of the magnets M1, M2, M3, M4 and M5 is represented in figure 3. M1 has a coercive field of 2.8 kOe, a ratio of remanence magnetisation versus saturation magnetisation of 0.65. Note that a randomly oriented material would have a ratio of 0.5 and a fully oriented material would achieve a ratio of 1.0 and a saturation magnetisation of 45.4 emu/g. It is therefore found at present that a slight orientation of the SFO particles occurs during the pressing step due to mechanical effects related to the morphology of the platelet-shaped particles.

The observed magnetic response is associated with a magnetic hysteresis loop that is characteristic of a hard material, with improved magnetic characteristics with respect to the unsintered compacted starting SFO material (M0). As we increase the sintering temperature, the magnetic properties are affected by lowering the coercive field to 2.5 kOe for M2 and 2.0 kOe for M3. In both M1, M2 and M3, the low density thereof did not provide sufficient mechanical integrity due to the low densification to handle samples properly. For M4, although the relative density compared to the theoretical density improves, reaching a value of 94%, a drastic decrease in the magnetic response was obtained with a decrease in the coercive field at 1.3 kOe. Magnetic response that decreases as the sintering temperature increases to 1250 °C (M5) having a coercive field of 1.0 kOe, with a reduction of the ratio between remanence magnetisation versus saturation magnetisation to 0.55. This worsening of the magnetic response is related to the increase in grain size (figure 1) associated with the densification of the magnet.

Therefore, from strontium ferrite particles, obtaining a permanent densified magnet by means of conventional heat treatment is associated with a growth in grain size that reduces the magnetic response thereof, in particles the coercive field that decreases by an amount greater than 50 % with respect to the value of the initial particles in powder form.

### Comparative example 2. Obtaining a permanent magnet of strontium hexaferrite (SFO) by means of cold sintering using an aqueous solution according to US2017/0088471A1

A mixture was prepared based on the particles obtained in Comparative Example 1 of strontium hexaferrite, corresponding to 0.5 g of SFO particles and 30% by weight of 1 M or 17.5 M acetic acid as aqueous-based solvent. The mixture was manually homogenised in an agate mortar for about 10 minutes until it reached a moistened powder.

In a second step, the moistened mixture was compacted in a hardened steel die with an internal diameter of 0.83 cm at a pressure of 150 MPa for 5 minutes.

Subsequently, the set of the die with the compacted moistened powder was subjected to a heating process by means of a heating press in an air atmosphere, maintaining the sample under pressure. This process of heating under pressure is referred to as "cold sintering" in the literature. The conditions of the process were a temperature of 190 °C for 2 h under a uniaxial pressure of 375 MPa. After the process, the part was extracted from the die at a temperature of 80 °C and subsequently cooled under ambient conditions to room temperature. The magnets thus obtained are called M6 and M8 using 1 M or 17.5 M acetic acid, respectively.

In an additional process, the magnets were subjected to a heat treatment at a temperature of 1100 °C for 2 h in an air atmosphere with a heating rate of 5 °C/min. The resulting magnets after the heat treatment are named magnet M7 and M9 using 1 M or 17.5 M acetic acid, respectively.

The M6 magnet reached a relative density <80 % with respect to the theoretical density and presented a percentage of crystalline phases of 79 % SFO and 21 % Fe₃O₄ phase iron oxide. After heat treatment at 1100 °C for 2 hours, the M7 magnet presented a density of 84 % with respect to the theoretical density with a decrease in the percentage of Fe₃O₄ iron oxide of up to 10%. Increasing the molarity of the aqueous solution from 1 M to 17.5 M, the obtained magnet M8 presented a density of 80% with respect to the theoretical density with a percentage of crystalline phases of 74 % of SFO and 26 % of α-Fe₂O₃ iron oxide, while after the heat treatment at 1100 °C for 2 hours, the M9 magnet began to increase relative density to 88 % with a decrease in the percentage of α-Fe₂O₃ to 8 %. In both cases, the process gave rise to a partial recrystallisation of the ferrite and a densification of the part after the heat treatment at high temperature.

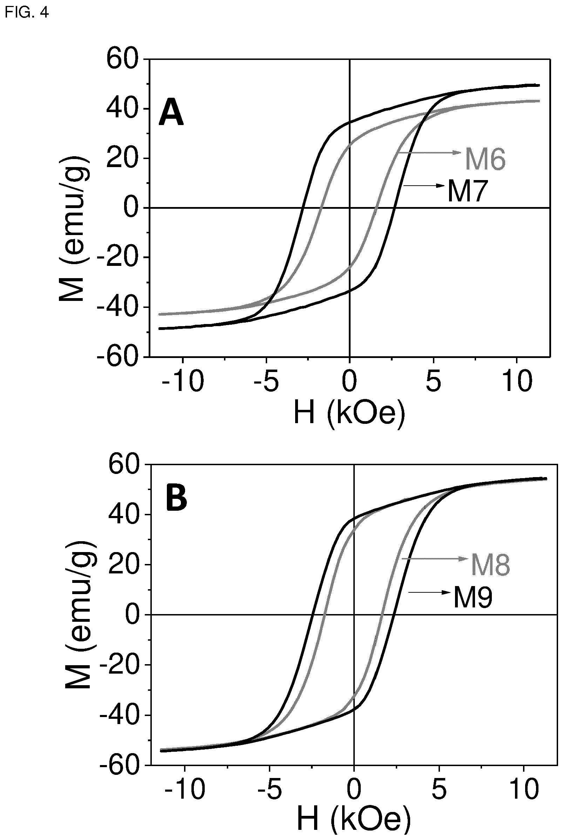

The magnetic response of M6, M7, M8 and M9 is represented in figure 4. M6 and M8 presented a coercive field of 1.6 kOe and a ratio of remanence magnetisation versus saturation magnetisation of 0.58 and 0.62, respectively, indicating that the mechanical orientation of the platelet morphology particles did not improve with respect to the samples obtained in comparative example 1. The observed magnetic response is associated with a magnetic hysteresis loop characteristic of the combination of SFO and the corresponding iron oxide. In both cases, for magnet M6 and M8, the low density thereof did not provide sufficient mechanical integrity due to the low densification to handle the sample properly.

For magnets M7 and M9, after the heat treatment process at 1100 °C, an increase in the magnetic response was obtained by increasing both the coercive field to 2.7 kOe and 2.3 kOe, respectively, and the ratio between remanence magnetisation versus saturation magnetisation to 0.69 for both magnets. This improvement of the magnetic signal is related to the partial recovery of the SFO phase and the retention of the particle size after the heat treatment process. However, the density of the permanent magnet is less than 90 % of the theoretical density of the SFO and it presents water absorption and brittleness that prevents the use thereof as a permanent ceramic magnet.

Therefore, by means of the cold sintering process or heating under pressure using an aqueous solvent, a densification level greater than 85 % was not reached. Moreover, a notable loss of magnetic properties is observed that correlates with the non-reversible chemical decomposition of the hard magnetic phase SFO to give rise to iron oxide phases. The subsequent heat treatment allows the recrystallisation of the SFO phase that produces an improvement in the magnetic properties, however, the density of the ceramic material does not exceed 90 % of the theoretical density of the SFO.

**Table 2. Characteristic properties of permanent magnets prepared by means of cold sintering using an aqueous solution.**

| Magnet | Relative Density (%) * | Solvent | Sintering (T/t) | Crystalline phases | Hc (kOe) | Mr/Ms Ratio | Ms (emu/g) |
|---|---|---|---|---|---|---|---|
| M6 | 78 | 1 M acetic acid | No | 79 % SFO, 21 % Fe₃O₄ | 1.6 | 0.58 | 43.2 |
| M7 | 84 | 1 M acetic acid | 1100 °C / 2h | 90 % SFO, 10 % Fe₃O₄ | 2.7 | 0.69 | 49.5 |
| M8 | 80 | 17.5 M acetic acid | No | 74 % SFO, 26 % α-Fe₂O₃ | 1.6 | 0.62 | 54.1 |
| M9 | 88 | 17.5 M acetic acid | 1100 °C / 2h | 92 % SFO, 8 % α-Fe₂O₃ | 2.3 | 0.69 | 54.4 |

| | | | | | | | |
|---|---|---|---|---|---|---|---|
| * Regarding the theoretical density of SFO | | | | | | | |

### Comparative example 3. Manufacture of the permanent strontium hexaferrite (SFO) magnet by means of conventional thermal sintering using an organic solvent

A mixture of 0.5 g of the particles obtained in Comparative Example 1 of strontium hexaferrite, SFO, and a certain percentage by weight of an organic solvent (glacial acetic acid, oleic acid or oleamine). The mixture was manually homogenised in an agate mortar for about 10 minutes until it reached a moistened powder.

In a second step the homogeneously moistened powder was compacted in a hardened steel die with an internal diameter of 0.83 cm and a pressure of 150 MPa was applied for 5 minutes.

Subsequently, the compacted parts were extracted and a conventional thermal sintering process of the samples was carried out at the maximum temperature of 1100 °C for 2 h. The heat treatment was carried out in an air atmosphere using a heating rate of 5 °C/min until reaching the maximum temperature, where it was maintained for 2 h and subsequent cooling to room temperature according to the oven.

The data relating to magnets using glacial acetic acid (M10), oleic acid (M11) and oleamine (M12) sintered by conventional thermal methodology are summarised in Table 3. The sintered parts presented as the only crystalline phase, 100 % SFO and reached a relative density against the theoretical density of SFO ≤ 80 %, regardless of the organic solvent used for sintering.

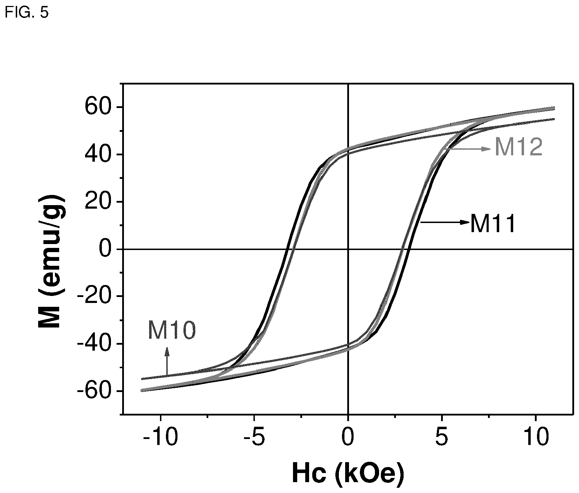

The magnetic response of M10, M11 and M12 is represented in figure 5. In all cases, the magnets presented a coercive field ≥ 2.9 kOe, a ratio of remanence magnetisation to saturation magnetisation of about 0.70 and a saturation magnetisation of 55 emu/g. The use of an organic solvent favored the mechanical alignment of the particles with platelet morphology of SFO compared to the processes that use an aqueous-based solvent. The observed magnetic response is associated with a magnetic hysteresis loop that is characteristic of a hard material, with improved magnetic characteristics with respect to the compacted SFO material without sintering (M0). However, in all cases, the density is less than 90 % of the theoretical density and the mechanical integrity is insufficient for use as a permanent sintered magnet.

Therefore, a conventional sintering process in which the compaction step is improved by the use of an organic solvent does not solve the problem of obtaining densified compacts with a coercive field equal to or greater than the coercive field of the starting SFO particles.

**Table 3. Characteristic properties of permanent magnets prepared by means of conventional sintering using an organic solvent.**

| Magnet | Relative Density (%) * | Solvent % by weight | Sintering (T/t) | Crystalline phases | Hc (kOe) | Mr/Ms Ratio | Ms (emu/g) |
|---|---|---|---|---|---|---|---|
| M10 | 80 | glacial acetic acid, 50 % | 1100 °C / 2h | 100% SFO | 2.9 | 0.73 | 54.9 |
| M11 | 76 | oleic acid, 8 % | 1100 °C / 2h | 100 % SFO | 3.2 | 0.70 | 59.4 |
| M12 | 72 | oleamine, 6 % | 1100 °C / 2h | 100% SFO | 2.9 | 0.71 | 59.6 |

| | | | | | | | |
|---|---|---|---|---|---|---|---|
| * Regarding the theoretical density of SFO | | | | | | | |

### Example 1. Obtaining a permanent magnet by means of the method of the present invention

To prepare a permanent ceramic magnet, platelet-shaped particles of strontium hexaferrite (SFO, the same powder described in Comparative Example 1 was used) which presented a bimodal distribution of particle sizes corresponding to platelet thicknesses between 100 nm and 500 nm and platelet diameters between 1 µm and 5 µm were used.

Mixtures were prepared comprising 0.5 g of SFO and the organic solvents indicated in Table 4, which were glacial acetic acid, oleic acid or oleamine. The mixtures were manually homogenised in an agate mortar for about 10 minutes until reaching a moistened powder.

In a second step, the moistened mixture resulting from the first step was compacted in a hardened steel die with an internal diameter of 0.83 cm at a pressure of 150 MPa for 5 minutes.

Subsequently, the set of the die with the compacted moistened powder was subjected to a heating process under pressure by means of a heating press in an air atmosphere. The conditions of the heating process under pressure with parameters related to pressure, temperature and time are specified in table 4. The temperature of the heating process under pressure was selected above the decomposition temperature of the organic solvent. After the process, the part was extracted from the die at a temperature of 80 °C and subsequently cooled under ambient conditions. The resulting magnets are called M13, M15 and M17 magnets (see Table 4).

In a subsequent process the M13, M15 and M17 magnets were subjected to a heat treatment at a maximum temperature of 1100 °C for 2 h in an air atmosphere. The heat treatment consisted of: a heating ramp of 5 °C/min until reaching the maximum temperature where it was maintained for 2 h and the subsequent cooling to room temperature according to the oven. The magnets thus obtained are called M14, M16 and M18 (See Table 4).

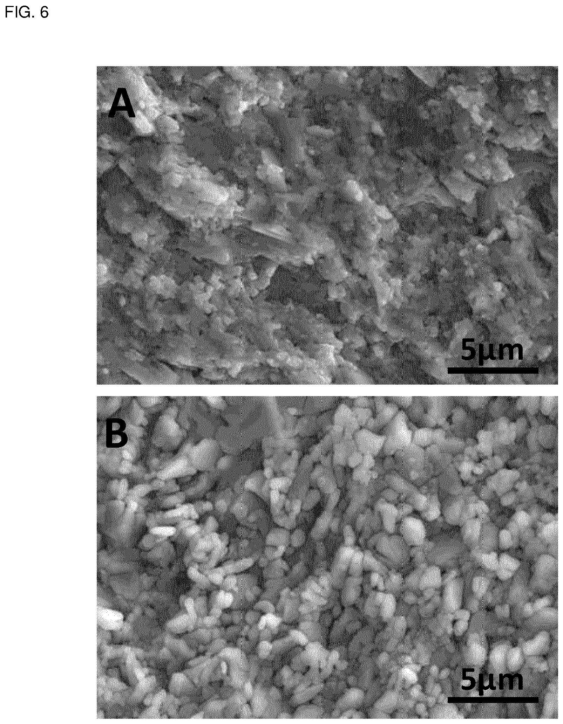

Figure 6A shows the scanning electron microscopy micrograph of a sintered magnet using glacial acetic acid as organic solvent at 50% by weight with respect to the SFO material, at a temperature of 190 °C for 2 h under a uniaxial pressure of 375 MPa (M13 magnet). The grain size of the M13 ferrite-based magnet presented a bimodal microstructure with grain sizes of approx. 2 µm and 5 µm respectively, which is a reflection of the size distribution of the starting particles. During the process sintering necks are produced between the particles, obtaining a relative density with respect to the theoretical density of 85%. After the heat treatment at 1100 °C for 2 hours (figure 6B), the M14 magnet presented a density of 92 % with respect to the theoretical density, identifying a growth in the particle size that maintains the bimodal microstructure and becomes approx. 3 µm and 5 µm.

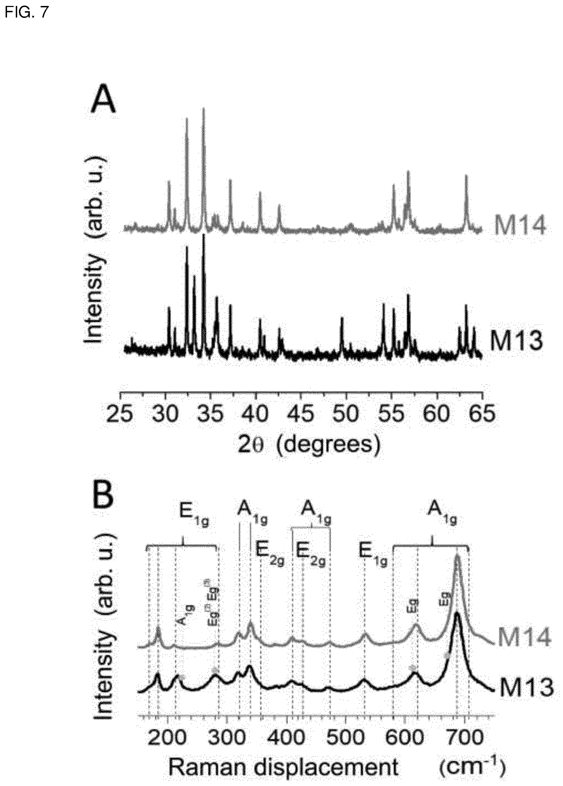

An X-ray diffraction analysis from a Rietveld refinement determined a partial decomposition of the SFO for sample M13 using glacial acetic acid with a percentage of crystalline phases of 66% SFO and 34% α-Fe₂O₃ iron oxide. After the heat treatment process at 1100 °C, sample M14 presented a total recrystallisation of the SFO, not identifying any crystalline or amorphous impurity as shown in figure 7 (analysis carried out by means of X-ray and Raman spectroscopy). Therefore, it is observed that the heat treatment allows reaching an adequate density and recrystallising the SFO phase to obtain a sintered ferrite permanent magnet material.

The magnets prepared in the present invention using oleic acid (M15) and oleamine (M17) maintained the crystalline phase of SFO after the compaction process followed, and a low densification of 75 % and 72 % of the theoretical density of the SFO, respectively. After the heat treatment process at 1100 °C for 2 h, the M16 and M18 magnets using oleic acid and oleamine, respectively, reached adequate densification with relative density values ≥ 92 %.

**Table 4. Characteristic properties of the permanent magnets of the present invention using organic solvent**

| Magnet | Rel. Dens. (%) * | Solvent % by weight | Heating under pressure (T/t/P) | Sintering (T/t) | Crystalline phases | Hc (kOe) | Mr/Ms Ratio | Ms (emu/g) |
|---|---|---|---|---|---|---|---|---|
| M13 | 85 | glacial acetic acid, 50 % | 190 °C/ 2h/ 375 MPa | No | 66% SFO, 34% α-Fe₂O₃ | 1.6 | 0.64 | 42.0 |
| M14 | 92 | glacial acetic acid, 50 % | 190 °C/ 2h/ 375 MPa | 1100 °C / 2h | 100% SFO | 2.9 | 0.73 | 59.5 |
| M15 | 75 | oleic acid, 8 % | 270 °C/ 3h/ 670 MPa | No | 100% SFO | 1.7 | 0.62 | 45.6 |
| M16 | 92 | oleic acid, 8 % | 270 °C/ 3h/ 670 MPa | 1100 °C / 2h | 100% SFO | 2.9 | 0.75 | 59.0 |
| M17 | 72 | oleamine, 6 % | 260 °C/ 2h/ 670 MPa | No | 100% SFO | 1.5 | 0.71 | 43.9 |
| M18 | 92 | oleamine, 6% | 260 °C/ 2h/ 670 MPa | 1100 °C / 2h | 100 % SFO | 3.0 | 0.73 | 42.4 |

| | | | | | | | | |
|---|---|---|---|---|---|---|---|---|
| * Regarding the theoretical density of SFO | | | | | | | | |

The magnetic response of M13, M15 and M17 show a coercive field of around 1.6 kOe and a ratio of remanence magnetisation to saturation magnetisation of 0.64, 0.62 and 0.71, respectively. The low density thereof did not provide sufficient mechanical integrity to handle the sample properly.

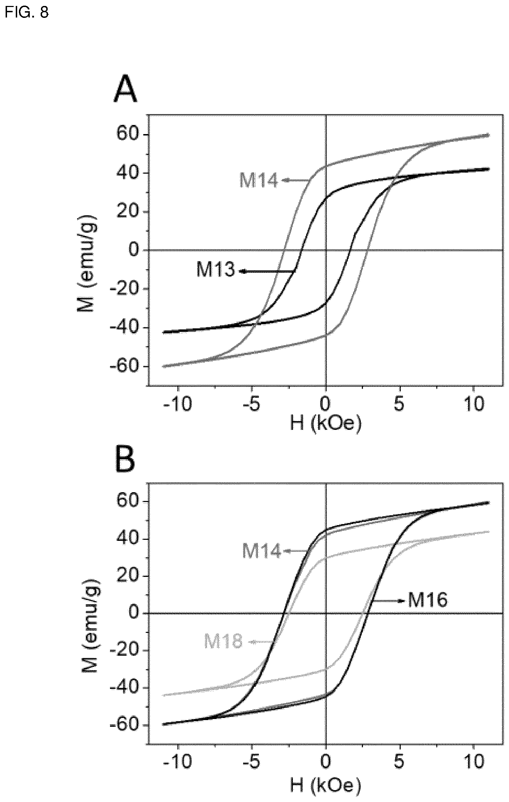

After the heat treatment of the parts M13, M15 and M17 at 1100 °C for 2 h, the M14, M16 and M18 magnets presented a density of 92 % with respect to the theoretical one, a coercive field of at least 2.9 kOe and an improvement in the ratio of remanence magnetisation to saturation magnetisation greater than 0.71. The improvement in particle orientation combines mechanical orientation during the compaction process and preferential recrystallisation during treatment at 1100 °C. The magnetic response of the M13, M14, M16 and M18 magnets is presented in figure 8.

The permanent magnets of the present invention therefore have the advantages of a density greater than 90 %, which gives them adequate mechanical integrity for use as permanent ceramic ferrite magnets. The method of the invention allows to control the growth of the grain size and the crystalline phases of hard ferrite that provide a high coercive field. The properties of the permanent magnets of the present invention represent an improvement with respect to conventional sintering processes (Comparative Example 1) and with respect to cold sintering processes that use aqueous-based solvents (Comparative Example 2) given that in the comparative examples, a similar degree of densification was not reached while maintaining controlled grain size. Likewise, in comparative examples 1 and 2, the magnetic properties for dense materials reached by means of the method of the present invention are not achieved. It is shown that the method of the present invention solves the problem of densifying permanent magnets by limiting grain growth to provide an improved permanent magnet.

### Example 2. Obtaining a permanent magnet by means of the method of the invention in the presence of a magnetic field

It starts from the precursor mixture used in sample M17 manually mixed in an agate mortar for about 10 minutes until reaching a homogeneous moistened powder.

In a second step, the moistened mixture resulting from the first step was compacted in a hardened steel die with an internal diameter of 1 cm at a pressure of 100 MPa, simultaneously applying a magnetic field of 0.3 T. Process prior to sintering.

Subsequently, the set of the die with the compact was subjected to heating under pressure by means of a heating press in an air atmosphere. The conditions of the process were a temperature of 260 °C, above the boiling temperature of the organic solvent, for a time of 2 h under a uniaxial pressure of 460 MPa. After the process, the part was extracted from the die at a temperature of 80 °C and subsequently cooled to room temperature.

In a subsequent process, the magnets obtained were subjected to a heat treatment at a maximum temperature of 1100 °C for 2 h in an air atmosphere. The heat treatment consisted of heating at a rate of 5 °C/min until reaching the maximum temperature, where it was maintained for 2 h, and subsequent cooling to room temperature. In this manner, the M19 magnet was obtained, the properties of which are presented in Table 5.

**Table 5. Properties of an anisotropic permanent magnet of the present invention obtained by means of the method of the present invention.**

| Magnet | Dens. (%) * | Solvent % by weight | Heating under pressure (T/t/P) | Sintering (T/t) | Crystalline phases | Hc (kOe) | Mr/Ms Ratio | Ms (emu/g) |
|---|---|---|---|---|---|---|---|---|
| M19 | 92 | oleamine, 6 % | 260 °C/ 2h/ 460 MPa | 1100 °C / 2h | 100% SFO | 2.4 | 0.86 | 38.1 |

| | | | | | | | | |
|---|---|---|---|---|---|---|---|---|
| * Regarding the theoretical density of SFO | | | | | | | | |

The M19 magnet presented a 92 % relative density with respect to the theoretical density. This relative density is similar to that obtained without applying a magnetic field during the previous compaction of the mixture (M18 magnet).

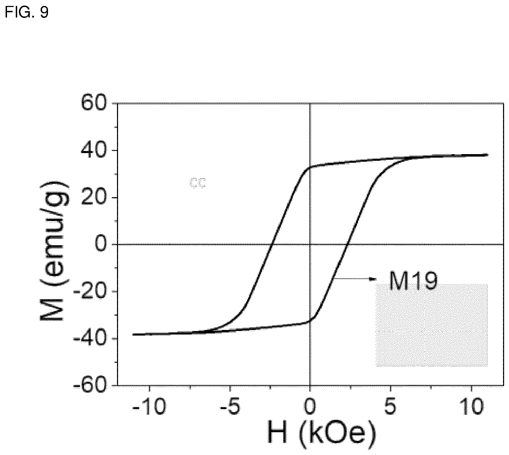

The magnetic response corresponding to the M19 magnet is shown in figure 9. A slight reduction in the coercive field was observed with respect to the M18 magnet, going from 3 kOe to 2.4 kOe. In addition, an improvement of the remanence magnetisation compared to the saturation magnetisation is obtained, going from 0.73 for the M18 magnet to 0.86 for the M19 magnet. The increase in said ratio indicates a greater degree of orientation of the crystalline structure in the pressing direction as a consequence of the orientation of the particles in the presence of the external magnetic field favored by the organic solvent, the mechanical action of the pressing process itself and the crystalline orientation during the heat treatment. The M19 magnet of the present invention therefore has an anisotropic behaviour.

### Example 3. Obtaining a permanent magnet from mixtures of strontium ferrite (SFO) microparticles and nanoparticles by means of the method of the invention

A mixture with 90 % by weight of SFO, and 10 % by weight of strontium hexaferrite nanoparticles was prepared, ("nSFO" hereinafter). The mixture was homogenised by means of a dry grinding process for 10 min in a Mixermill 8000 equipment using a nylon container and yttria-stabilised zirconia balls with 1 mm diameter.

From said mixture, the method described in example 1 was followed, which comprised:
a) homogeneous mixing of the previous SFO and nSFO mixture with an organic solvent of glacial acetic acid or oleic acid;
b) compacting the homogeneous mixture obtained in step (a) at a uniaxial pressure of 200 MPa for a period of 5 min;
c) heating the product obtained in step b) under uniaxial pressure between 20 MPa and 5000 MPa at a temperature between 120 °C and 300 °C, and for a period of time between 30 min and 4 h;
d) cooling the product obtained in step (c) until reaching a temperature between 80 and 120 °C to facilitate the extraction of the compacts, and subsequent cooling to room temperature between 18 °C and 40 °C;
and e) sintering the product obtained in step (d) at a temperature between 1000 °C and 1150 °C in the presence of an air atmosphere.

In this example, a magnetic field was not used in order to compare the samples obtained with the magnets of example 1. The application of a magnetic field in step b) would provide an increase in anisotropy according to example 2 and is applicable to the different materials of this example 3.

**Table 6. Properties of permanent magnets obtained by means of the method of the present invention.**

| Magnet | Rel. Dens. (%) * | Solvent % by weight | Heating under pressure (T/t/P) | Sintering (T/t) | Crystalline phases | Hc (kOe) | Mr/Ms Ratio | Ms (emu/g) |
|---|---|---|---|---|---|---|---|---|
| M20 | 86 | glacial acetic acid, 50 % | 190 °C/ 2h/ 375 MPa | No | 96% SFO, 4 % α-Fe₂O₃ | 1.6 | 0.59 | 46.8 |
| M21 | 92 | glacial acetic acid, 50 % | 190 °C/ 2h/ 375 MPa | 1100 °C / 2h | 100 % SFO | 2.8 | 0.73 | 57.0 |
| M22 | 74 | oleic acid, 8% | 270 °C/ 3h/ 670 MPa | No | 100% SFO | 1.8 | 0.67 | 52.0 |
| M23 | 92 | oleic acid, 8% | 270 °C/ 3h/ 670 MPa | 1100 °C / 2h | 100 % SFO | 2.8 | 0.76 | 58.9 |

| | | | | | | | | |
|---|---|---|---|---|---|---|---|---|
| * Regarding the theoretical density of SFO | | | | | | | | |

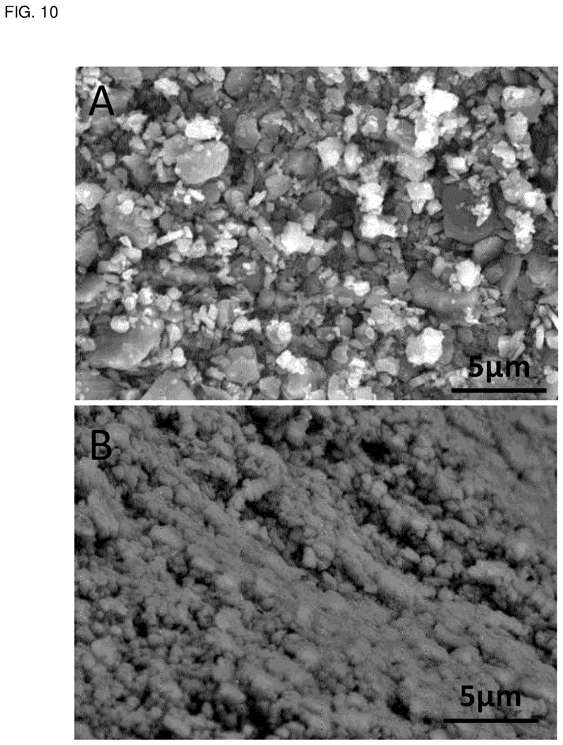

Figure 10A shows a scanning electron microscopy micrograph of a magnet based on 90% by weight of SFO and 10% by weight of starting nSFO and processed using glacial acetic acid as organic solvent at 50% by weight with respect to the starting material which, after compaction, was subjected to heating under pressure at a temperature of 190 °C for 2 h and at a uniaxial pressure of 375 MPa (M20).

Compared to the M13 magnet obtained under the same conditions using 100% SFO as starting powder, a lower degradation of the SFO crystalline phase was identified. After a heat treatment at 1100 °C for 2 h (M21), a greater effectiveness in grain growth control was observed, which is limited to an average value of ~2 µm as shown in figure 10B. During the heat treatment at 1100 °C for 2 h, the densification of the compact increases until reaching 92 % relative density with respect to the theoretical density. An advantage of the incorporation of nanoparticles in the initial mixture consists in the refinement of the grain sizes that show a single mode. In this manner, larger particles in the starting powder are refined during the processing of the present invention to generate a monomodal microstructure, i.e., with a homogeneous size distribution.

In the case of using oleic acid together with the starting powder after the compaction process at a temperature of 270 °C for 3 h under a uniaxial pressure of 670 MPa (M22), it gives rise to a lower relative density after the heating process under pressure and the crystalline phase of SFO remains without degradation. After a heat treatment at 1100 °C for 2 h (M23), a relative density of 92% was reached with respect to the theoretical density, as in the case of using glacial acetic acid (M21).

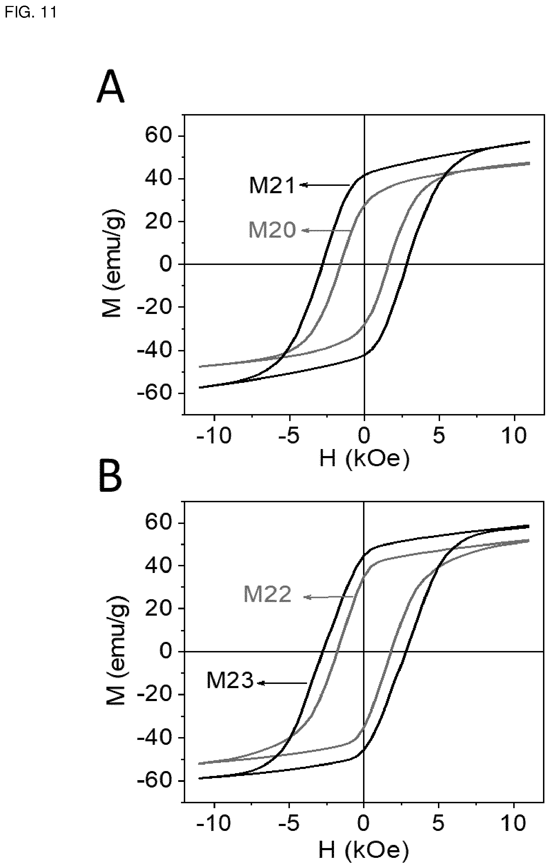

An X-ray diffraction analysis from a Rietveld refinement determined a partial decomposition of the SFO for the M20 magnet using glacial acetic acid with a percentage of crystalline phases of 96 % SFO and 4 % α-Fe₂O₃ iron oxide, while using oleic acid as organic solvent, there is no decomposition of the SFO phase (M22, 100 % SFO). After the heat treatment process at 1100 °C for 2 h, regardless of the organic solvent used in the process, 100 % SFO was identified for M21 and M23. The magnetic signal after the presented process is associated with a magnetic hysteresis cycle characteristic of a hard material such as SFO, figure 11.

Therefore, the incorporation of SFO nanoparticles in the mixture with SFO improves the crystalline stability of the compacts after heating under pressure, which translates into greater control of the grain size of the magnets once thermally treated. This greater homogeneity in the grain size of the sintered ceramic magnet of the present invention has a monomodal microstructure that results in an advantage related to the functional response of the material.

### Example 4. Obtaining a permanent magnet from mixtures of SFO microparticles and a soft magnetic phase (FMB) by means of the method of the invention

A mixture of 95-90 % by weight of strontium hexaferrite microparticles, SFO and 5-10 % by weight of a soft magnetic phase, FMB selected from
- Fe microparticles, mFe, with 12 µm average size;
- nanoparticles of iron oxide spinels, nFesOa with 60 nm average size
- and Fe nanoparticles, nFe, with 80 nm average size comprising a surface layer of Fe₃O₄ as passivation against spontaneous oxidation in an air atmosphere which is <15 % by weight of the total particle.

The mixture was homogenised by means of a dry grinding process in an air atmosphere for 10 min in a Mixermill 8000 equipment using a nylon container and yttria-stabilised zirconia balls with 1 mm diameter.

From said mixture, the method described in example 1 was followed, which comprised:
a) homogeneous mixing of the SFO and mFe, nFe₃O₄ or nFe premix with an organic solvent of glacial acetic acid;
b) compacting the homogeneous mixture obtained in step (a) at a uniaxial pressure of 200 MPa for a period of 5 min;
c) heating the product obtained in step b) under uniaxial pressure between 20 MPa and 5000 MPa at a temperature between 120 °C and 300 °C, and for a period of time between 30 min and 4 h;
d) cooling the product obtained in step (c) until reaching a temperature between 80 and 120 °C to facilitate the extraction of the compacts, and subsequent cooling to room temperature between 18 °C and 40 °C;
and e) sintering the product obtained in step (d) at a temperature between 1000 °C and 1150 °C in the presence of an air atmosphere.

In this example, a magnetic field was not used in order to compare the samples obtained with the magnets of example 1. The application of a magnetic field in step b) would provide an increase in anisotropy according to example 2 and is applicable to the different materials of this example 4.

The percentage by weight of SFO and FMB, as well as the conditions during sintering are indicated in table 7, where the main parameters of the method of the invention followed to obtain the magnets M24 to M29 are summarised.

**Table 7. Properties of permanent magnets obtained by means of the method of the present invention.**

| Magnet | Starting powder | Rel. Dens. (%) * | Sintering (T/t) | Crystalline phases | Hc (kOe) | Mr/Ms Ratio | Ms (emu/g) |
|---|---|---|---|---|---|---|---|
| M24 | 0.5 g SFO+ 10 % mFe | 75 | No | 3 % SFO, 97 % Fe₃O₄ | 0.01 | 0.05 | 76.2 |
| M25 | 0.5 g SFO+ 10 % mFe | 93 | 1100 °C / 2h | 76 % SFO, 24 % α-Fe₂O₃ | 2.5 | 0.67 | 45.6 |
| M26 | 0.5 g SFO+ 5 % nFe | 79 | No | 55 % SFO, 35 % Fe₃O₄, 10 % α-Fe₂O₃ | 0.5 | 0.19 | 49.5 |
| M27 | 0.5 g SFO+ 5 % nFe | 91 | 1100 °C / 2h | 95 % SFO, 5 % α-Fe₂O₃ | 2.9 | 0.73 | 58.7 |
| M28 | 0.5 g SFO+ 10 % nFesOa | 88 | No | 63 % SFO, 11 % Fe₃O₄, 26 % α-Fe₂O₃ | 2.4 | 0.54 | 45.7 |
| M29 | 0.5 g SFO+ 10 % nFesOa | 94 | 1100 °C / 2h | 87 % SFO, 13 % α-Fe₂O₃ | 3.0 | 0.72 | 55.0 |

| | | | | | | | |
|---|---|---|---|---|---|---|---|
| * Regarding the theoretical density of SFO | | | | | | | |

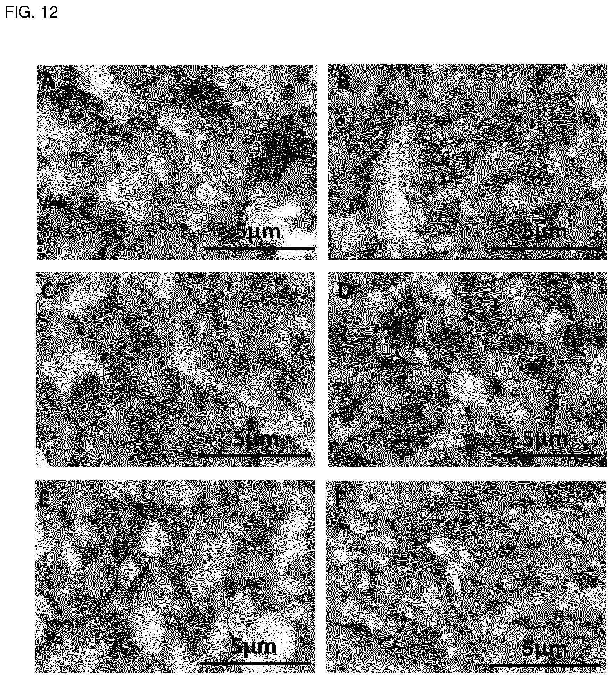

Figure 12A, 12C and 12E show scanning electron microscopy micrographs of SFO-based magnets incorporating 10% mFe (M24), 5% nFe (M26) and 10 % nFe₃O₄ (M28), respectively, and compacted using glacial acetic acid as organic solvent at 50 % by weight of the magnetic material (SFO+FMB) and heated under uniaxial pressure of 375 MPa at a heating temperature of 190 °C for 2 h. In all cases, a bimodal particle size was distinguished, consisting of microparticles with a size of 1-2 µm and nanostructures with particle size <100 nm. During the process of heating under pressure an improvement in apparent density is obtained, reaching densities greater than 75 % with respect to the theoretical density of SFO.

After heat treatment of the compounds at 1100 °C for 2 h, the M25 (figure 12B), M27 (figure 12D) and M29 magnets (figure 12F), obtained from the mixture of SFO + 10 % mFe, + 5 % nFe and + 10 % nFe₃O₄, respectively, an increase in particle size was observed, reaching an average of 2 µm with a more homogeneous particle distribution and a relative density compared to the theoretical density of the resulting magnets greater than 91 %; said apparent density is advantageous for the functionality of the magnet.

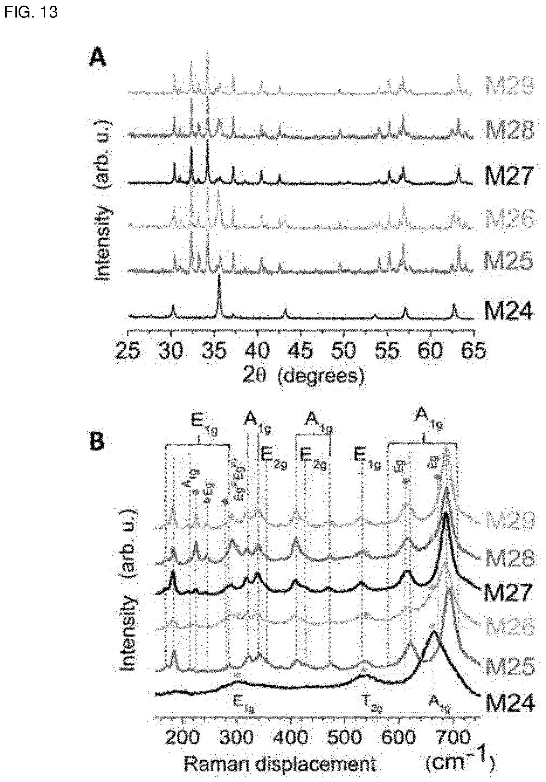

The M24, M26 and M28 magnets (samples obtained from a method without sintering heat treatment) showed a partial decomposition of the starting SFO. In the case of sample M24 the decomposition was almost complete. After the heat treatment process at 1100 °C for 2 hours, the M25, M27 and M29 magnets presented a partial recrystallisation of the SFO, identifying a percentage of secondary phase corresponding to iron oxide. α-Fe₂O₃ less than 24 %, figure 13.

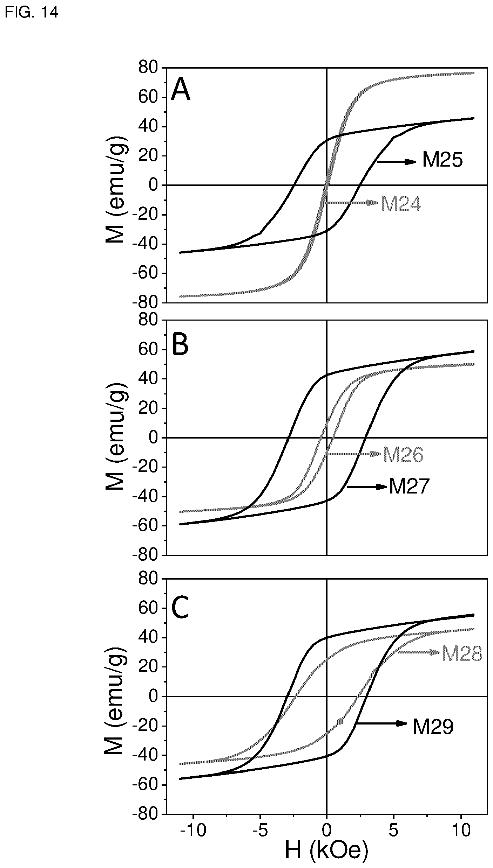

The magnetic response of composite M24 to M29 magnets is presented in figure 14. The M24, M26 and M28 parts presented magnetic hysteresis cycles that can be explained by the composition of the phases comprising them, due to the transformation of phases induced during the process. For example, the M24 magnet presented a cycle associated with a soft magnetic phase that is explained by the 97 % of the crystalline phase as Fe₃O₄ identified after sintering. Specifically for the M24 and M26 magnets, the low density thereof did not provide sufficient mechanical integrity.

After the sintering heat treatment at 1100 °C for 2 h, recrystallisation of the SFO results in an improvement in the magnetic properties. M25, M27 and M29 magnets presented a coercive field greater than 2.5 kOe, even 3.0 kOe for the M29 magnet. The ratio of remanence magnetisation versus saturation magnetisation became 0.67, 0.73 and 0.72, and the saturation magnetisation became 45.6 emu/g, 58.7 emu/g and 55.0 emu/g for the M25, M27 and M29, respectively.

The incorporation of soft magnetic phases in the starting mixture increases the decomposition of the SFO phase in step c) of the method of the present invention. However, after step e) the resulting properties of the magnets presented an improvement in densification following the method of the present invention and a microstructure characterised in that said grain sizes are lower than the average grain sizes of the sintered samples following the method of the present invention which only uses starting SFO (example 1). Despite the presence of secondary phases, the reduction in the average grain size of the materials densified in example 4 corresponds to a higher magnetic response than that corresponding to the materials densified in examples 1 and 2.

## Claims

1. A method for obtaining a permanent ceramic magnet comprising
• hard magnetic particles in the form of platelets of ferrite or hexaferrite composition of formula MFe₁₂O₁₉, wherein M is a divalent alkaline earth metal selected from Sr⁺², Ba⁺² and any of the combinations thereof, and wherein said magnetic particles have a bimodal particle size distribution with a first particle size between 100 nm and 500 nm and a second particle size between 1 µm and 5 µm,
**characterised in that** it comprises the following steps:
a) mixing homogeneously
• hard magnetic particles of ferrite or hexaferrite composition of formula MFe₁₂O₁₉, wherein M is a divalent alkaline earth metal selected from Sr⁺², Ba⁺² and any of the combinations thereof, with particle size between 101 nm and 10 µm,
• and an organic solvent;
wherein the percentage of organic solvent ranges from 5 % to 50 % by weight with respect to the total weight of the mixture,
b) compacting the homogeneous mixture obtained in step (a) at a uniaxial pressure of between 5 MPa and 360 MPa for a period of time between 6 s and 5 min;
c) heating the product obtained in step b) under uniaxial pressure between 20 MPa and 5000 MPa at a temperature between 120 °C and 300 °C, and for a period of time between 30 min and 4 h;
d) cooling the product from step (c) until reaching a temperature between 80 and 120 °C to facilitate the extraction of the compacts, and subsequent cooling to room temperature between 18 °C and 0 °C;
and e) sintering the product from step (d) at a temperature between 1000 °C and 1150 °C in the presence of an air atmosphere.

2. The method according to claim 1, wherein the mixture of step (a) further comprises
• hard magnetic particles of ferrite or hexaferrite composition of formula MFe₁₂O₁₉, wherein M is a divalent alkaline earth metal selected from Sr⁺², Ba⁺² and any of the combinations thereof, with particle size between 5 nm and 100 nm.

3. The method according to any of claims 1, wherein the mixture of step (a) further comprises
• soft magnetic particles of Fe or Fe₃O₄ selected from particles with particle size between 10 µm and 15 µm or particles with particle size between 5 nm and 100 nm.

4. The method according to any of claims 1 to 3, wherein step (a) is carried out in the presence of an atmosphere of the same organic solvent used in the mixture.

5. The method according to any of claims 1 to 4, wherein the organic solvent of step (a) is an acidic organic solvent selected from glacial acetic acid (CH₃COOH), oleic acid (C₁₈H₃₄O₂), lactic acid (C₃H₆O₃), formic acid (CH₂O₂), citric acid (C₆H₈O₇), oxalic acid (C₂H₂O₄), uric acid (C₅H₄N₄O) or malic acid (C₄H₆O₅); or a combination thereof.

6. The method according to any of claims 1 to 4, wherein the organic solvent of step (a) is a basic organic solvent selected from anisole (C₇H₈O), aniline (C₆H₇N), purine (C₅H₄N₄), triethylamine (C₆H₁₅N) or oleamine (C₁₈H₃₇N); or a combination thereof.

7. The method according to any of claims 1 to 6, wherein step (b) is carried out in a period of time between 6 s and 5 min.

8. The method according to any of claims 1 to 7, wherein step (b) is carried out in the presence of a magnetic field between 0.2 T and 5 T.

9. The method according to any of claims 1 to 8, wherein the maximum temperature reached in the sintering step (e) is maintained constant for a period of time between 30 min and 4 h.

10. The method according to any of claims 1 to 9, wherein the sintering step (e) is carried out by means of a thermal cycle with a heating rate of between 0.5 °C/min and 10 °C/min.

## Patentansprüche

1. Verfahren zur Herstellung eines permanenten Keramikmagneten, umfassend
• hartmagnetische Partikel in Form von Plättchen der Ferrit- oder Hexaferrit-Zusammensetzung der Formel MFe₁₂O₁₉, wobei M ein zweiwertiges Erdalkalimetall ist, ausgewählt aus Sr⁺², Ba⁺² und beliebigen Kombinationen davon, und wobei die magnetischen Partikel eine bimodale Partikelgrößenverteilung mit einer ersten Partikelgröße zwischen 100 nm und 500 nm und einer zweiten Partikelgröße zwischen 1 µm und 5 µm aufweisen,
**dadurch gekennzeichnet, dass** es die folgenden Schritte umfasst:
a) homogenes Mischen
• hartmagnetische Partikel der Ferrit- oder Hexaferrit-Zusammensetzung der Formel MFe₁₂O₁₉, wobei M ein zweiwertiges Erdalkalimetall ist, ausgewählt aus Sr⁺², Ba⁺² und beliebigen Kombinationen davon, mit einer Partikelgröße zwischen 101 nm und 10 µm,
• und einem organischen Lösungsmittel;
wobei der Prozentsatz des organischen Lösungsmittels im Bereich von 5 % bis 50 Gew.-%, bezogen auf das Gesamtgewicht der Mischung, liegt,
b) Verdichten der in Schritt (a) erhaltenen homogenen Mischung bei einem einachsigen Druck zwischen 5 MPa und 360 MPa über einen Zeitraum von 6 s bis 5 min;
c) Erhitzen des in Schritt b) erhaltenen Produkts unter einachsigem Druck zwischen 20 MPa und 5000 MPa bei einer Temperatur zwischen 120 °C und 300 °C und über einen Zeitraum von 30 min bis 4 h;
d) Abkühlen des Produkts aus Schritt (c) auf eine Temperatur zwischen 80 und 120 °C, um die Extraktion der Presslinge zu erleichtern, und anschließendes Abkühlen auf Raumtemperatur zwischen 18 °C und 0 °C;
und e) Sintern des Produkts aus Schritt (d) bei einer Temperatur zwischen 1000 °C und 1150 °C in Gegenwart einer Luftatmosphäre.

2. Verfahren nach Anspruch 1, wobei das Gemisch aus Schritt (a) ferner Folgendes umfasst
• hartmagnetische Partikel der Ferrit- oder Hexaferrit-Zusammensetzung der Formel MFe₁₂O₁₉, wobei M ein zweiwertiges Erdalkalimetall ist, ausgewählt aus Sr⁺², Ba⁺² und beliebigen Kombinationen davon, mit einer Partikelgröße zwischen 5 nm und 100 nm.

3. Verfahren nach Anspruch 1, wobei das Gemisch aus Schritt (a) ferner Folgendes umfasst
• weichmagnetische Partikel aus Fe oder Fe₃C₄, ausgewählt aus Partikeln mit einer Partikelgröße zwischen 10 µm und 15 µm oder Partikeln mit einer Partikelgröße zwischen 5 nm und 100 nm.

4. Verfahren nach einem der Ansprüche 1 bis 3, wobei Schritt (a) in Gegenwart einer Atmosphäre des gleichen organischen Lösungsmittels durchgeführt wird, das in der Mischung verwendet wird.

5. Verfahren nach einem der Ansprüche 1 bis 4, wobei das organische Lösungsmittel in Schritt (a) ein saures organisches Lösungsmittel ist, ausgewählt aus Eisessig (CH₃COOH), Ölsäure (C₁₈H₃₄O₂), Milchsäure (C₃H₆O₃), Ameisensäure (CH₂O₂), Zitronensäure (C₆H₈O₇), Oxalsäure (C₂H₂O₄), Harnsäure (C₅H₄N₄O) oder Äpfelsäure (C₄H₆O₅); oder einer Kombination davon.

6. Verfahren nach einem der Ansprüche 1 bis 4, wobei das organische Lösungsmittel von Schritt (a) ein basisches organisches Lösungsmittel ist, ausgewählt aus Anisol (C₇H₈O), Anilin (C₆H₇N), Purin (C₅H₄N₄), Triethylamin (C₆H₁₅N) oder Oleamin (C₁₈H₃₇N); oder einer Kombination davon.

7. Verfahren nach einem der Ansprüche 1 bis 6, wobei Schritt (b) in einem Zeitraum von 6 s bis 5 min durchgeführt wird.

8. Verfahren nach einem der Ansprüche 1 bis 7, wobei Schritt (b) in Gegenwart eines Magnetfeldes zwischen 0,2 T und 5 T durchgeführt wird.

9. Verfahren nach einem der Ansprüche 1 bis 8, wobei die im Sinterschritt (e) erreichte Maximaltemperatur über einen Zeitraum von 30 min bis 4 h konstant gehalten wird.

10. Verfahren nach einem der Ansprüche 1 bis 9, wobei der Sinterschritt (e) mittels eines thermischen Zyklus mit einer Heizrate zwischen 0,5 °C/min und 10 °C/min durchgeführt wird.

## Revendications

1. Procédé d'obtention d'un aimant céramique permanent comprenant
• des particules magnétiques dures sous la forme de plaquettes de composition de ferrite ou d'hexaferrite de formule MFe₁₂O₁₉, où M est un métal alcalino-terreux divalent choisi parmi Sr⁺², Ba⁺² et l'une quelconque des combinaisons de ceux-ci, et lesdites particules magnétiques ayant une distribution granulométrique bimodale avec une première granulométrie comprise entre 100 nm et 500 nm et une seconde granulométrie comprise entre 1 µm et 5 µm,
**caractérisé en ce qu'**il comprend les étapes suivantes :
a) mélange de manière homogène
• de particules magnétiques dures de composition de ferrite ou d'hexaferrite de formule MFe₁₂O₁₉, où M est un métal alcalino-terreux divalent choisi parmi Sr⁺², Ba⁺² et l'une quelconque des combinaisons de ceux-ci, avec une granulométrie comprise entre 101 nm et 10 µm,
• et d'un solvant organique ;
dans lequel le pourcentage de solvant organique est compris dans la plage allant de 5 % à 50 % en poids par rapport au poids total du mélange,
b) compactage du mélange homogène obtenu à l'étape (a) à une pression uniaxiale comprise entre 5 MPa et 360 MPa pendant un laps de temps compris entre 6 s et 5 min ;
c) chauffage du produit obtenu à l'étape b) sous une pression uniaxiale comprise entre 20 MPa et 5000 MPa à une température comprise entre 120 °C et 300 °C, et pendant un laps de temps compris entre 30 min et 4 h ;
d) refroidissement du produit de l'étape (c) jusqu'à ce qu'il atteigne une température comprise entre 80 et 120 °C pour faciliter l'extraction des compacts, et ensuite refroidissement jusqu'à une température ambiante comprise entre 18 °C et 0 °C ;
et e) frittage du produit de l'étape (d) à une température comprise entre 1000 °C et 1150 °C en présence d'une atmosphère d'air.

2. Procédé selon la revendication 1, dans lequel le mélange de l'étape (a) comprend en outre
• de particules magnétiques dures de composition de ferrite ou d'hexaferrite de formule MFe₁₂O₁₉, où M est un métal alcalino-terreux divalent choisi parmi Sr⁺², Ba⁺² et l'une quelconque des combinaisons de ceux-ci, avec une granulométrie comprise entre 5 nm et 100 nm.

3. Procédé selon la revendication 1, dans lequel le mélange de l'étape (a) comprend en outre
• des particules magnétiques souples de Fe ou Fe₃C₄ choisies parmi les particules avec une granulométrie comprise entre 10 µm et 15 µm ou les particules avec une granulométrie comprise entre 5 nm et 100 nm.

4. Procédé selon l'une quelconque des revendications 1 à 3, dans lequel l'étape (a) est réalisée en présence d'une atmosphère du même solvant organique que celui utilisé dans le mélange.

5. Procédé selon l'une quelconque des revendications 1 à 4, dans lequel le solvant organique de l'étape (a) est un solvant organique acide choisi parmi l'acide acétique glacial (CH₃COOH), l'acide oléique (C₁₈H₃₄O₂), l'acide lactique (C₃H₆O₃), l'acide formique (CH₂O₂), l'acide citrique (C₆H₈O₇), l'acide oxalique (C₂H₂O₄), l'acide urique (C₅H₄N₄O) ou l'acide malique (C₄H₆O₅); ou une combinaison de ceux-ci.

6. Procédé selon l'une quelconque des revendications 1 à 4, dans lequel le solvant organique de l'étape (a) est un solvant organique basique choisi parmi l'anisole (C₇H₈O), l'aniline (C₆H₇N), la purine (C₅H₄N₄), la triéthylamine (C₆H₁₅N) ou l'oléamine (C₁₈H₃₇N) ; ou une combinaison de ceux-ci.

7. Procédé selon l'une quelconque des revendications 1 à 6, dans lequel l'étape (b) est réalisée dans un laps de temps compris entre 6 s et 5 min.

8. Procédé selon l'une quelconque des revendications 1 à 7, dans lequel l'étape (b) est réalisée en présence d'un champ magnétique compris entre 0,2 T et 5 T.

9. Procédé selon l'une quelconque des revendications 1 à 8, dans lequel la température maximale atteinte dans l'étape de frittage (e) est maintenue constante pendant un laps de temps compris entre 30 min et 4 h.

10. Procédé selon l'une quelconque des revendications 1 à 9, dans lequel l'étape de frittage (e) est réalisée au moyen d'un cycle thermique avec une vitesse de chauffage comprise entre 0,5 °C/min et 10 °C/min.
